# EUROPEAN PATENT APPLICATION

(11) **EP 4 129 060 A1**
(43) Date of publication of application: **08.02.2023**
(21) Application number: 21774442.4
(22) Date of filing: 25.03.2021
(51) Int. Cl.: A01M 7/00, B05B 17/00

(54) **CHEMICAL AGENT-SPRAYING DEVICE**

(30) Priority: 27.03.2020 JP 2020056947
(71) Applicant: Yanmar Power Technology Co., Ltd., Osaka-shi Osaka 530-0013 (JP); Arimitsu Industry Co., Ltd., Osaka-shi, Osaka 537-0001 (JP)
(72) Inventor: HIRASAWA, Kazuaki, Osaka-shi, Osaka 530-0013 (JP); IKEGAMI, Soichiro, Osaka-shi, Osaka 530-0013 (JP); UKAI, Hirofumi, Osaka-shi, Osaka 530-0013 (JP); YOSHIDA, Yoshihiro, Osaka-shi, Osaka 537-0001 (JP)
(74) Representative: Novagraaf International SA
(86) International application number: PCT/JP2021/012641
(87) International publication number: WO 2021/193845

(57) **Abstract**

This chemical agent-spraying device is provided with a chemical agent tank (12) and chemical agent-jetting parts (13) that jet out a chemical agent supplied from the chemical agent tank (12). The chemical agent-jetting parts (13) include a first chemical agent-jetting part (16) that jets out the chemical agent onto the reverse surfaces of crop leaves as an area to which the chemical agent is to be jetted, and a second chemical agent-jetting part (17) that jets out the chemical agent onto the obverse surfaces of crop leaves as an area to which the chemical agent is to be jetted.

## Description

### TECHNICAL FIELD

The present invention relates to a chemical agent-spraying device mountable on a work vehicle.

### BACKGROUND ART

The above chemical agent-spraying device is mounted on a work vehicle such as a tractor, for example, and is provided with a chemical agent tank and a chemical agent-jetting part that jets out the chemical agent supplied from the chemical agent tank. When spraying the chemical agent to a crop to be sprayed with the chemical agent, the chemical agent in the chemical agent tank is sprayed by jetting out the chemical agent from the chemical agent-jetting part while the work vehicle is caused to be traveling (see, for example, Patent Literature 1).

In the above chemical agent-spraying device, it is desirable to efficiently adhere the chemical agent to the entire crop. Therefore, in the device described in the Patent Literature 1, a high voltage is applied to the chemical agent by a high voltage generator thereby to spray the chemical agent in an electrified state, thus improving the chemical agent's rate of adhesion to the crop.

In another chemical agent-spraying device; in addition to the chemical agent-jetting part, there is provided an air-jetting part that jets out blower air from a fan, and spraying the chemical agent riding on the stream of the air jetted out by the air-jetting part sprays the chemical agent over the entire crop (see, for example, Patent Literature 2).

### CITATION LIST

### Patent Literature

Patent Literature 1: Japanese Unexamined Patent Application Publication No. Sho 59-071636
Patent Literature 2: Japanese Examined Patent Application Publication No. Hei 05-032111

### DISCLOSURE OF INVENTION

### PROBLEMS TO BE SOLVED BY THE INVENTION

In the device described in the Patent Literature 1, the chemical agent is only jetted out from a certain direction by the chemical agent-jetting part, so, for example, when the chemical agent is jetted out toward the obverse surface side of crop leaf by the chemical agent-jetting part, it is difficult for the chemical agent to reach the reverse surface side of the crop leaf, making it difficult for the chemical agent to adhere to the reverse surface side of the crop leaf.

In the device described in the Patent Literature 2, the chemical agent is jetted out in a manner to ride on the stream of the air jetted out by the air-jetting part, so the chemical agent can be sprayed on the entire crop more effectively than in the device described in the Patent Literature 1. However, the direction of the air jetted out by the air-jetting part is the same as the chemical agent-jetting direction by the chemical agent-jetting part, for example, so as to assist the chemical agent being jetted out by the air-jetting part. Therefore, when the chemical agent is jetted out by the chemical agent-jetting part toward the obverse surface side of the crop leaf, the chemical agent can adhere to the entire crop on the obverse surface side of the leaf, but it is difficult for the chemical agent to reach the reverse surface side of the crop leaf, making it difficult for the chemical agent to adhere to the reverse surface of the crop leaf.

The main issue of the present invention is to provide a chemical agent-spraying device that adheres a chemical agent not only to an obverse surface side of a crop leaf but also to a reverse surface side, making it possible to efficiently adhere the chemical agent onto the entire crop.

### MEANS FOR SOLVING THE PROBLEMS

A first characteristic configuration of the present invention is that a chemical agent-spraying device mountable on a work vehicle, includes: a chemical agent tank; and a chemical agent-jetting part that jets out a chemical agent supplied from the chemical agent tank, wherein the chemical agent-jetting part includes a first chemical agent-jetting part that jets out the chemical agent onto a reverse surface of a crop leaf as an area to which the chemical agent is to be jetted, and a second chemical agent-jetting part that jets out the chemical agent onto an obverse surface of a crop leaf as an area to which the chemical agent is to be jetted.

According to the present configuration, the first chemical agent-jetting part, since targeting the reverse surface of the crop leaf as an area to which the chemical agent is to be jetted, can efficiently adhere the chemical agent onto the reverse surface side of the crop leaf. The second chemical agent-jetting part, since targeting the obverse surface of the crop leaf as an area to which the chemical agent is to be jetted, can efficiently adhere the chemical agent onto the obverse surface side of the crop leaf. Thus, adhering the chemical agent not only to the obverse surface side of the crop leaf but also to the reverse surface side can efficiently adhere the chemical agent onto the entire crop.

A third characteristic configuration of the present invention is that a chemical agent-spraying device mountable on a work vehicle, includes: a chemical agent tank; a chemical agent-jetting part that jets out a chemical agent supplied from the chemical agent tank; a fan; and an air-jetting part that, from a lower side to an upper side, jets out blower air from the fan, wherein the chemical agent-jetting part includes a first chemical agent-jetting part that, as a chemical agent-jetting target range for jetting out the chemical agent, targets a crop present within an air jetting range where the air-jetting part jets out air, and a second chemical agent-jetting part that, as a chemical agent-jetting target range for jetting out the chemical agent, targets a crop present outside the air jetting range where the air-jetting part jets out the air.

According to the present configuration, the air-jetting part jets out the blower air from the lower side toward the upper side, thus making it possible to lift and turn over the crop leaf by the blower air. The first chemical agent-jetting part that, as the chemical agent-jetting target range, targets the crop present within the air jetting range where the air-jetting part jets out the air, thus making it possible to jet out the chemical agent to the leaf turned over by the blower air. Therefore, the jetting of the blower air by the air-jetting part and the jetting of the chemical agent by the first chemical agent-jetting part can efficiently adhere the chemical agent onto the reverse surface side of the crop leaf.

The second chemical agent-jetting part that, as the chemical agent-jetting target range for jetting out the chemical agent, targets the crop present outside the air jetting range where the air-jetting part jets out the air, thus making it possible to jet out the chemical agent to the crop leaf not turned over by the blower air by the air-jetting part. Thus, the second chemical agent-jetting part, by jetting out the chemical agent toward the crop, can jet the chemical agent to the obverse surface side of the crop leaf, making it possible to efficiently adhere the chemical agent to the obverse surface side of the crop leaf.

From the above, adhering the chemical agent not only to the obverse surface side of the crop leaf but also to the reverse surface side can efficiently adhere the chemical agent onto the entire crop.

### BRIEF DESCRIPTION OF DRAWINGS

[Fig. 1] Fig. 1 is a side view of a tractor provided with a chemical agent-spraying device.
[Fig. 2] Fig. 2 is a front view of the chemical agent-spraying device.
[Fig. 3] Fig. 3 is a rear view of the chemical agent-spraying device.
[Fig. 4] Fig. 4 is a plan view of the chemical agent-spraying device.
[Fig. 5] Fig. 5 is a plan view of the chemical agent-spraying device.
[Fig. 6] Fig. 6 is a side view of the chemical agent-spraying device.
[Fig. 7] Fig. 7 is a perspective view showing first and second chemical agent-jetting parts.
[Fig. 8] Fig. 8 is a side view of the chemical agent-spraying device with the second chemical agent-jetting part positioned in a storage position.
[Fig. 9] Fig. 9 shows a state of jetting out a chemical agent by the first and second chemical agent-jetting parts.
[Fig. 10] Fig. 10 is a perspective view showing an air-jetting part.
[Fig. 11] Fig. 11 is a plan view showing a power transmission part.
[Fig. 12] Fig. 12 is a graph showing a result of an experiment.
[Fig. 13] Fig. 13 is a perspective view showing the air-jetting part.

### DESCRIPTION OF EMBODIMENTS

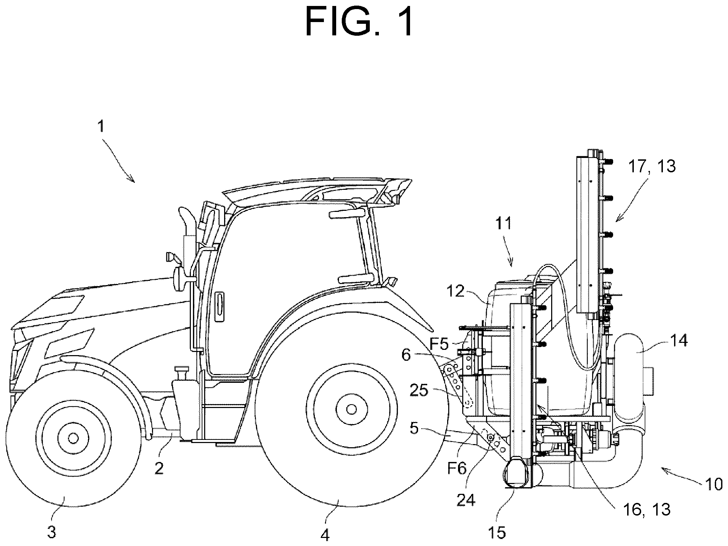

On the basis of the drawings, the following describes an embodiment where a chemical agent-spraying device according to the present invention is mounted on a work vehicle. As shown in Fig. 1, this chemical agent-spraying device 10 is mountable on a rear part of a tractor 1 as a work vehicle. The work vehicle is not limited to the tractor 1, but any other work vehicle can also be applied.

The front part of a traveling machine body 2 of the tractor 1 is supported by a pair of right and left front wheels 3, and the rear part of the traveling machine body 2 is supported by a pair of right and left rear wheels 4. A 3-point link mechanism including a pair of right and left lower links 5 and a pair of right and left upper links 6 is provided at the rear part of the traveling machine body 2 of the tractor 1, and the chemical agent-spraying device 10 is so configured as to be freely mounted to the 3-point link mechanism. At the rear part of the traveling machine body 2 of the tractor 1, a raising/lowering device (not shown) having a hydraulic device such as a raising/lowering cylinder is provided, and it is so configured that raising and lowering the 3-point link mechanism by the raising/lowering device raise and lower the chemical agent-spraying device 10.

In the following description, the right and left direction of the chemical agent-spraying device 10 is the same as the right and left direction of the tractor 1, and the front and back direction of the chemical agent-spraying device 10 is the same as the front and back direction of the tractor 1. A right side in the right and left direction refers to a right side relative to the tractor 1 moving forward, and a left side in the right and left direction refers to a left side relative to the tractor 1 moving forward. An outer side in the right and left direction refers to an outer side of the tractor 1 in the right and left direction, and an inner side in the right and left direction refers to an inner side of the tractor 1 in the right and left direction.

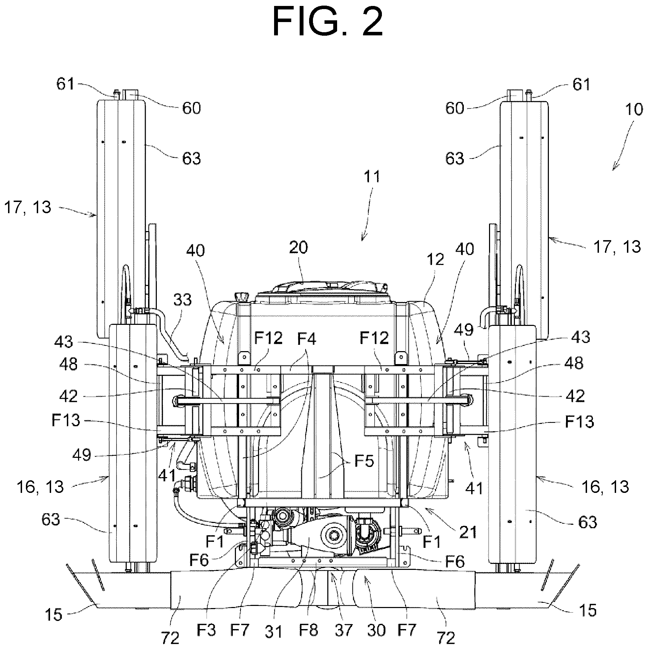

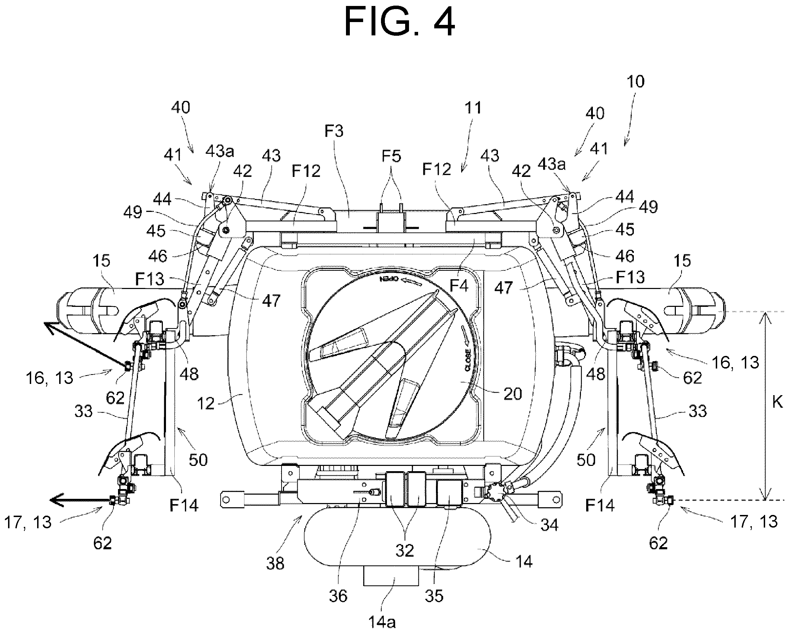

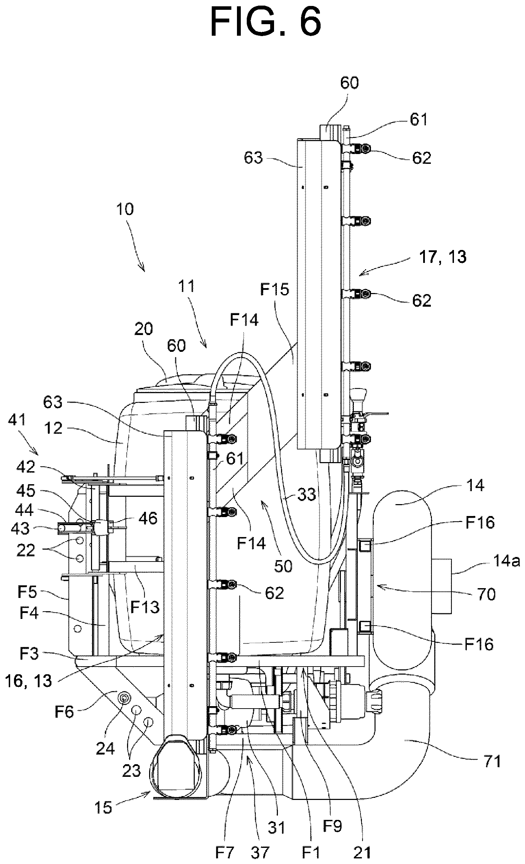

As shown in Figs. 2 to 6, a device main body 11 of the chemical agent-spraying device 10 includes a chemical agent tank 12 that tanks the chemical agent, a chemical agent-jetting part 13 that jets out the chemical agent supplied from the chemical agent tank 12, a fan 14, and an air-jetting part 15 for jetting, from the lower side toward the upper side, the blower air from the fan 14. As shown in Figs. 4 and 6, the chemical agent-jetting part 13 includes a first chemical agent-jetting part 16 placed at the front side and a second chemical agent-jetting part 17 placed on the rear side; the first and second chemical agent-jetting parts 16 and 17 are so placed as to be dispersed on the right and left sides in a state of protruding outward from the chemical agent tank 12 in the right and left direction.

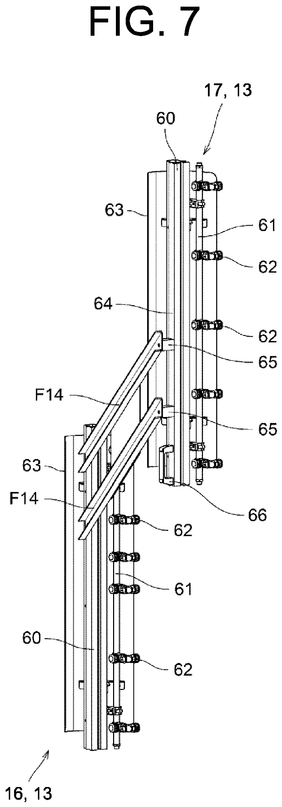

In the chemical agent-spraying device 10, various members are fixedly connected by bolts, nuts, and other coupling tools, but in Figs. 2 through 6, the coupling tools are omitted, in Figs. 7 through 9 as well, which follow Fig. 6, coupling tools are similarly omitted.

### (Chemical Agent Tank)

As shown in Figs. 4 and 6, the chemical agent tank 12, in a state of overlapping the first chemical agent-jetting part 16 and the second chemical agent-jetting part 17, is placed between the first chemical agent-jetting part 16 and the second chemical agent-jetting part 17, in the front and back direction, and is provided in such a state as to swell more forward than the first chemical agent-jetting part 16. The chemical agent tank 12 is placed in the center part of the chemical agent-spraying device 10 in the front and back and right and left directions (see Fig. 2).

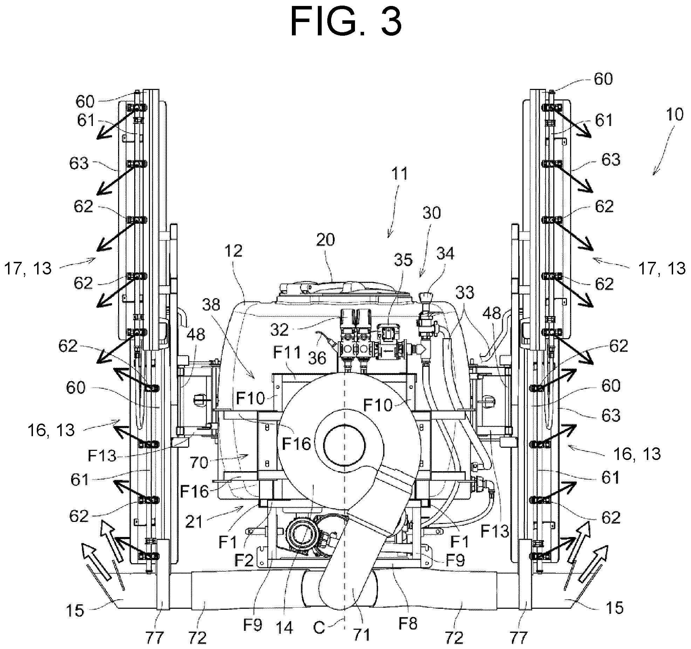

As shown in Figs. 2, 3, and 6, the chemical agent tank 12 is rectangular in shape with the upper part opened, and is provided with a lid part 20 that can freely close the opening at the upper part. A tank support frame 21 to receive and support the chemical agent tank 12 is provided on the lower side of the chemical agent tank 12. The tank support frame 21 is so configured as to combine and, by welding, a coupling tool, etc., to connect a plurality of 1st frames F1 (see Figs. 2 and 6) extending in the front and back direction and a 2nd frame F2 (see Fig. 3) extending in the right and left direction. The tank support frame 21, with a plurality of 1st frames F 1, receives and supports both end parts and center part of the chemical agent tank 12 in the right and left direction, and, with the 2nd frame F2, receives and supports the rear site of the chemical agent tank 12 in the front and back direction.

The tank support frame 21, in addition to the 1st frame F1 and the 2nd frame F2, includes, on the front side of the chemical agent tank 12, a 3rd frame F3 extending in the right and left direction, and a C-shaped 4th frame F4 open at the lower side, as shown in Fig. 2. The 3rd frame F3 is connected to the front end part of the plurality of 1st frames F 1 and is provided in a posture along the right and left direction. The 4th frame F4 is so configured as to combine a pair of right and left frames extending upward from the 1st frame F1 placed on both sides in the right and left direction, and a frame in a posture extending in the right and left direction in a state of connecting the upper end parts of the pair of right and left frames. At the upper end part of the 4th frame F4, both end parts in the right and left direction are connected to the front face part of the chemical agent tank 12 via a bracket.

### (Configuration of Chemical Agent-Spraying Device connected to Tractor)

To the 3rd frame F3 of the tank support frame 21, a 5th frame F5 and a 6th frame F6, etc. are connected so as to connect the tractor 1 with the chemical agent-spraying device 10, as shown in Figs. 2 and 6. The 5th frame F5, in a state across the 3rd frame F3 and the upper end part of the 4th frame F4, is provided in a posture of extending upward from the center part of the 3rd frame F3 in the right and left direction, and as shown in Fig. 1, the upper link 6 of the tractor 1 is freely connected. As shown in Fig. 6, the 5th frame F5 is formed of a plurality of connection hole parts 22, and the upper link 6 of the tractor 1 is connected via a pin, etc. (not shown) inserted into the connection hole part 22. The 6th frame F6 is provided in a sloping posture extending rearward downward from both end parts of the 3rd frame F3 in the right and left direction, and as shown in Fig. 1, the lower link 5 of the tractor 1 is freely connected. As shown in Fig. 6, the 6th frame F6 is formed of a plurality of connection hole parts 23, and the lower link 5 of the tractor 1 is connected via a pin 24 inserted into the connection hole part 23.

In this way, as shown in Fig. 1, it is so configured that connecting the upper link 6 of the tractor 1 to the 5th frame F5, and connecting the lower link 5 of the tractor 1 to the 6th frame F6 freely connect the chemical agent-spraying device 10 to the rear side of the tractor 1. For connecting the chemical agent-spraying device 10 to the rear side of the tractor 1, providing a fixing connection link 25 across the lower end part of the 5th frame F5 and the middle part of the upper link 6 fixes the angle of the upper link 6. Incidentally, the above can be performed without providing the fixing connection link 25.

### (Chemical Agent Supply Part)

As shown in Figs. 2 and 3, the chemical agent-spraying device 10 is provided with a chemical agent supply part 30 that supplies the chemical agent in the chemical agent tank 12 to the chemical agent-jetting part 13 thereby to jet out the chemical agent by the chemical agent-jetting part 13. The chemical agent supply part 30 has a pump 31 (see Fig. 2) placed on the lower side of the chemical agent tank 12 and a distribution part 32 (see Fig. 3) placed on the rear side of the chemical agent tank 12. The chemical agent tank 12, the pump 31, the distribution part 32, and the chemical agent-jetting part 13 are communicably connected to each other via a hose 33 or the like. The hose 33 is shown in the drawing with part thereof omitted.

The distribution part 32 is so configured as to freely switch the state of supplying the chemical agent, that is, supplying the chemical agent from the pump 31 to the chemical agent-jetting parts 13 on both sides in the right and left direction or to only the chemical agent-jetting part 13 on one side in the right and left direction. A pressure regulator valve 34, a flowrate sensor 35, a pressure sensor 36, etc. are provided in the vicinity of the distribution part 32, and it is so configured that the pressure of the chemical agent supplied to each chemical agent-jetting part 13 is freely adjustable so as to achieve a desired pressure of the chemical agent.

The pump 31 is placed on the lower side of the chemical agent tank 12, as shown in Figs. 2 and 6, in a state of overlapping the chemical agent tank 12 in the vertical direction. A pump support frame 37 for receiving and supporting the pump 31 is placed at an interval on the lower side of the tank support frame 21, and between the pump support frame 37 and the tank support frame 21 is a space for installing the pump 31. The pump support frame 37 is so configured as to combine and, by welding, a coupling tool, etc., to connect a plurality of 7th frames F7 (see Fig. 6) extending in the front and back direction and a plurality of 8th frame F8 (see Fig. 2) extending in the right and left direction. The front end parts of the 7th frame F7 on both sides in the right and left direction in the pump support frame 37 are, as shown in Fig. 6, respectively connected to two end parts of the 3rd frame F3 in the right and left direction by the 6th frame F6. The rear end parts of the 7th frame F7 on both sides of the pump support frame 37 in the right and left direction are respectively connected to two end parts of the 2nd frame F2 in the right and left direction in the tank support frame 21 by a 9th frame F9 extending in the vertical direction, as shown in Figs. 3 and 6.

The distribution part 32, the pressure regulator valve 34, the flowrate sensor 35, the pressure sensor 36, and the like are placed on the rear side of the chemical agent tank 12, as shown in Figs. 3 and 4. A member support frame 38 for supporting these members is provided in an upright posture extending upward from the rear end part of the 1st frame F1 in the tank support frame 21. As shown in Fig. 3, the member support frame 38 has a C-shaped structure with the lower side open, in which the upper end parts of a pair of right and left 10th frames F10 extending in the vertical direction are connected by an 11th frame F11 extending in the right and left direction. The 11th frame F11 is provided with, from the right side in the right and left direction via a bracket, etc., in the following order: the pressure regulator valve 34, the flowrate sensor 35, the distribution part 32, and the pressure sensor 36.

### (Configuration of supporting Chemical Agent-Jetting Part)

So as to support each of the right and left chemical agent-jetting parts 13, as shown in Fig. 2 and Fig. 4, there is provided a pair of right and left jetting part support frames 40 extending from the front side to the lateral side part of the chemical agent tank 12. The pair of right and left jetting part support frames 40 is similarly configured and therefore will be described hereafter simply as the jetting part support frame 40.

As shown in Figs. 2 and 4, the jetting part support frame 40, in addition to the 4th frame F4 that also serves as the tank support frame 21, includes, a rectangular 12th frame F12 as a combination of a frame extending right and left direction and a frame extending in the vertical direction, and a C-shaped 13th frame F13 as a combination of a frame extending front-rear direction and a frame extending in the vertical direction.

As shown in Figs. 2 and 4, the jetting part support frame 40 is provided with a positioning mechanism 41 for adjusting the position of the chemical agent-jetting part 13 in the right and left direction. Between the 12th frame F12 and the 13th frame F13, via a bracket or the like, there is provided a first shaft part 42 that can be rotated around an axial center along the vertical direction. In the positioning mechanism 41, the 13th frame F13 is supported in a manner to freely swing around the first shaft part 42 relative to the 12th frame F12.

In addition to the first shaft part 42, the positioning mechanism 41 has, as shown in Fig. 4, an adjusting rod 43 in a posture extending in the right and left direction, a swingable body 44 freely swingable around the first shaft part 42, a contacting part 46 caused to contact a contacted part 45 of the swingable body 44, and a biasing member 47 that can freely exert a biasing force in a manner to swing the 13th frame F13 outwardly in the right and left direction relative to the 12th frame F12.

As shown in Fig. 4, an inner end part of the adjusting rod 43 in the right and left direction is connected to the 12th frame F12 via a bracket or the like in a manner to swing about an axial center along the vertical direction. A plurality of connection positions (holes) spaced apart in the right and left direction is provided in the outer site of the adjusting rod 43 in the right and left direction, and swingable body 44 is freely connected to each of the plurality of connection positions (holes) via a coupling tool or the like.

As shown in Figs. 4 and 6, the contacted part 45 is provided on the swingable body 44 in the posture extending from the swingable body 44 to the 13th frame F13 side, and includes, for example, an elastic member that is elastically deformable. The contacting part 46 is formed of a plate-like body freely contacting the contacted part 45, and is fixed to the 13th frame F13 so as to be present in a position opposite to the contacted part 45.

As shown in Fig. 4, the biasing member 47 is provided over the rear site of the 12th frame F12 and the inner site of the 13th frame F13 in the right and left direction, and includes an air cylinder that can exert a biasing force to the side for separating the 13th frame F13 from the 12th frame F12. Incidentally, in the right jetting part support frame 40, the biasing member 47 is placed at a position that corresponds to the 12th frame F12 and to the upper end part of the 13th frame F13, in the left jetting part support frame 40, the biasing member 47 is placed at a position that corresponds to the 12th frame F12 and to the lower end part of the 13th frame F13, and in the right and left jetting part support frames 40, the biasing member 47 is placed in a state of being flipped upside down.

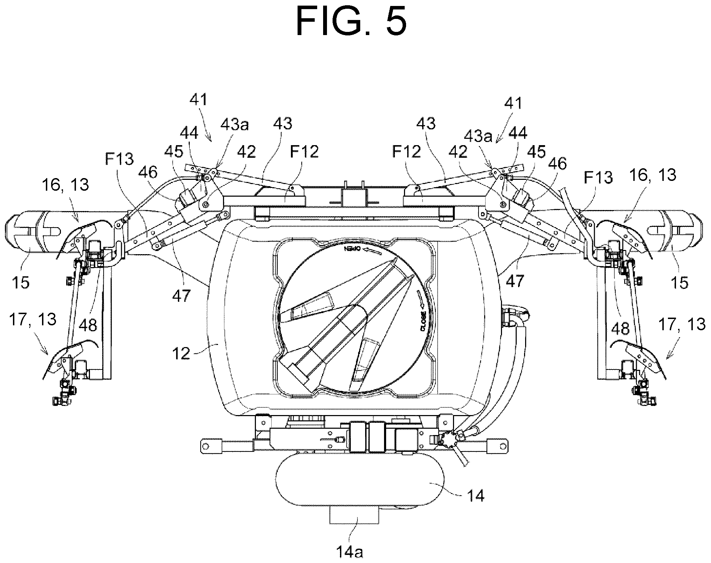

The positioning mechanism 41, as shown in Figs. 2, 4 and 5, swings the 13th frame F13 around the first shaft part 42 relative to the 12th frame F12 and adjusts the swingable body 44's connection position 43a in the adjusting rod 43, thereby to adjust the chemical agent-jetting part 13's position in the right and left direction. Fig. 4 shows a state where, with the swingable body 44's connection position 43a in the adjusting rod 43 as the outermost side in the right and left direction, the right and left chemical agent-jetting parts 13 are positioned on the innermost side in the right and left direction. Fig. 5 shows a state where, with the swingable body 44's connection position 43a in the adjusting rod 43 as the second position from the inner side in the right and left direction, the right and left chemical agent-jetting parts 13 are positioned on the second from the outer side in the right and left direction, partly omitting signs similar to those in Fig. 4.

For example, in Fig. 4, when moving the chemical agent-jetting part 13 outward in the right and left direction, a worker or the like grasps the 13th frame F13, etc., and swings the 13th frame F13 around the first shaft part 42 relative to the 12th frame F12 outward in the right and left direction. This swinging of the 13th frame F13 causes the contacting part 46, which is fixed to the 13th frame F13, to press the contacted part 45 fixed to the swingable body 44, causing the swingable body 44 to swing inward in the right and left direction around the first shaft part 42. At this time, the connection between the adjusting rod 43 and the swingable body 44 is once released, thereby to change the swingable body 44's connection position 43a in the adjusting rod 43, as shown in Fig. 5. Therefore, the swingable body 44 can be held in a state of being swung inward in the right and left direction around the first shaft part 42, so that the chemical agent-jetting part 13 can be moved outward in the right and left direction thereby to adjust the position.

Thus, each of the right and left chemical agent-jetting parts 13 is configured to be freely adjustable in position in the right and left direction by the positioning mechanism 41. This allows the positioning mechanism 41 to adjust the position of the chemical agent-jetting part 13 in the right and left direction so that, for example, the chemical agent-jetting part 13 is placed at a proper position relative to the crop according to the interval between the tractor 1 and the crop.

Here, for adjusting the positions of the right and left chemical agent-jetting parts 13 in the right and left direction by the positioning mechanism 41, it is so configured as to maintain the positional relation among the three including the first chemical agent-jetting part 16, the second chemical agent-jetting part 17, and the air-jetting part 15, as shown in Figs. 4 and 5. The positional relation among the three including the first chemical agent-jetting part 16, the second chemical agent-jetting part 17, and the air-jetting part 15 is as follows: the air-jetting part 15 is placed on the front side and outside in the right and left direction relative to the first chemical agent-jetting part 16, and the first chemical agent-jetting part 16 and the second chemical agent-jetting part 17 are placed in a manner to be aligned in the front and back direction.

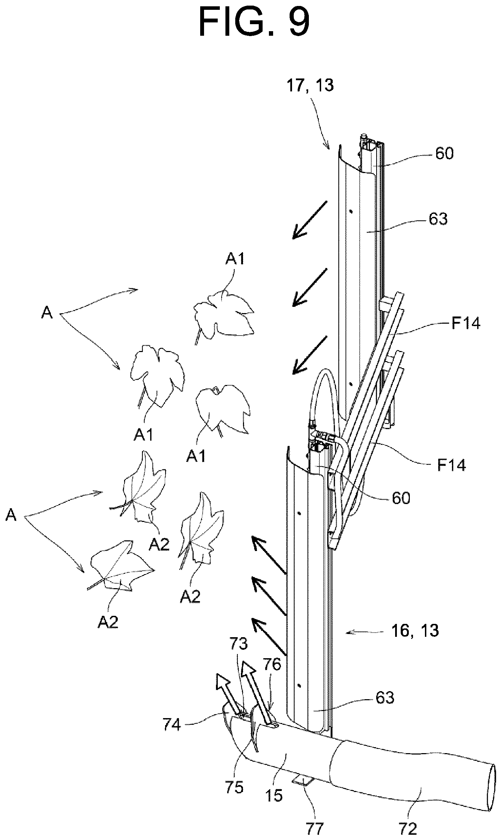

For maintaining the positional relation among the three including the first chemical agent-jetting part 16, the second chemical agent-jetting part 17, and the air-jetting part 15, as shown in Figs. 4 and 6, the first chemical agent-jetting part 16 and the second chemical agent-jetting part 17 are connected by a connecting frame 50, and as shown in Figs. 3 and 9, the air-jetting part 15 is fixed to the first chemical agent-jetting part 16 via a support stay 77 or the like. Figs. 3 and 9 omit a fixture such as a bundling band that fixes the air-jetting part 15 to the support stay 77 extending from the lower end part of the first chemical agent-jetting part 16.

The first chemical agent-jetting part 16 and the second chemical agent-jetting part 17 are connected by the connecting frame 50; therefore, when the positions of the right and left chemical agent-jetting parts 13 are adjusted in the right and left direction by the positioning mechanism 41, the first chemical agent-jetting part 16 and the second chemical agent-jetting part 17 move in unison, thereby to adjust positions of the first and second chemical agent-jetting parts 16 and 17 in the right and left direction. At this time, since the air-jetting part 15 is fixed to the first chemical agent-jetting part 16 via the support stay 77, etc., the air-jetting part 15 also attempts to move following the movement of the first chemical agent-jetting part 16. As shown in Fig. 3, although the air-jetting part 15 is connected to a first duct 71 via a second duct 72, the second duct 72 which has, for example, a flexible bellow site, can freely expand, contract, and deform. This allows the expansion, contraction, and deformation of the second duct 72 thereby to allow the air-jetting part 15 to move relative to the movement of the first chemical agent-jetting part 16. Therefore, when the first chemical agent-jetting part 16 and the second chemical agent-jetting part 17 move in unison, the air-jetting part 15 also moves in unison following the first chemical agent-jetting part 16, thus making it possible to maintain the positional relation among the three including the first chemical agent-jetting part 16, the second chemical agent-jetting part 17, and the air-jetting part 15.

Each of the right and left chemical agent-jetting parts 13 is provided with the first chemical agent-jetting part 16 placed on the front side and the second chemical agent-jetting part 17 placed on the rear side, as shown in Figs. 2, 4, and 6. The first chemical agent-jetting part 16 is connected to and supported at the rear end part of the 13th frame F13 in the jetting part support frame 40. At the rear end part of the 13th frame F13, as shown in Figs. 2 and 4, a second shaft part 48 along the vertical direction is provided, and the first chemical agent-jetting part 16 is supported via a bracket or the like in a manner to freely swing around the second shaft part 48 relative to the 13th frame F13. It is so configured that swinging the first chemical agent-jetting part 16 and the second chemical agent-jetting part 17 around the second shaft part 48 relative to the 13th frame F13 can freely adjust the first chemical agent-jetting part 16 and second chemical agent-jetting part 17's posture around the axial center along the vertical direction. Incidentally, in Fig. 5, swinging the first chemical agent-jetting part 16 and the second chemical agent-jetting part 17 around the second shaft part 48 relative to the 13th frame F13 can make an adjustment to the posture where the first chemical agent-jetting part 16 and the second chemical agent-jetting part 17 are aligned in the front and back direction as in Fig. 4.

The first chemical agent-jetting part 16 and the 12th frame F12 are connected by a connecting rod 49 via a bracket or the like as shown in Figs. 2 and 4, and the connecting rod 49 maintains the first chemical agent-jetting part 16 and second chemical agent-jetting part 17's posture around the axial center along the vertical direction. Incidentally, the connecting rod 49 is placed at a position that corresponds to the lower end part of the 12th frame F12 in the right jetting part support frame 40, is placed at a position that corresponds to the upper end part of the 12th frame F12 in the left jetting part support frame 40, and is placed in the state of being inverted vertically in the right and left jetting part support frames 40.

As shown in Figs. 4 and 6, the first and second chemical agent-jetting parts 16 and 17 are connected by the connecting frame 50 and can be freely moved in unison. The connecting frame 50 includes a pair of upper and lower 14th frames F14 vertically spaced apart, and a 15th frame F15 which connects the pair of upper and lower 14th frames F14. The pair of upper and lower 14th frames F14 is provided in a backward sloping up posture with the rear side placed more upward, and the front end part thereof is connected to the first chemical agent-jetting part 16 and the rear end part thereof is connected to the second chemical agent-jetting part 17. The 15th frame F15 is formed in the form of a plate extending in the vertical direction, and connects the rear sites of the pair of upper and lower 14th frames F14.

### (First and Second Chemical Agent-Jetting Parts)

Since the first and second chemical agent-jetting parts 16 and 17 are basically similar in configuration, similar configurations will be described only for the first chemical agent-jetting part 16, and different configurations are described for each of the first and second chemical agent-jetting parts 16 and 17.

As shown in Figs. 3 and 6, the first chemical agent-jetting part 16 is provided with a support frame 60 extending in the vertical direction, a chemical agent distribution part 61 extending in the vertical direction, a nozzle part 62 that jets out the chemical agent, and a cover part 63. The support frame 60 is formed in the shape of a square pipe extending in the vertical direction. The chemical agent distribution part 61 is formed as a pipe extending in the vertical direction, and has an upper end part, etc. to which the hose 33 is connected. The chemical agent distribution part 61 is configured to receive, into an inner space thereof, the chemical agent from the chemical agent tank 12, thus freely distributing the chemical agent y in the vertical direction. In the chemical agent distribution part 61, there is provided a plurality (e.g., five) of nozzle parts 62 spaced at a regular interval in the vertical direction. The nozzle part 62 is configured to jet out the chemical agent from the inner side in the right and left direction to the outer side. The nozzle part 62 can be configured, for example, with an electrostatic nozzle that applies a high voltage to the chemical agent and jets out the chemical agent in an electrically charged state. The cover part 63 is fixed to the support frame 60 via a bracket or the like, and is provided in a state of covering the front side and the diagonally outward side connecting thereto of the support frame 60 and the chemical agent distribution part 61 across the entire length of the support frame 60 and chemical agent distribution part 61 in the vertical direction.

In the first chemical agent-jetting part 16, as shown in Fig. 3, the support frame 60 is connected to and supported at the rear end part of the 13th frame F13 via the second shaft part 48. The support frame 60 of the first chemical agent-jetting part 16 is configured to freely swing around the second shaft part 48 relative to the 13th frame F13. The support frame 60 of the first chemical agent-jetting part 16 and the support frame 60 of the second chemical agent-jetting part 17 are connected by a pair of upper and lower 14th frames F14 (see Fig. 6); when the support frame 60 of the first chemical agent-jetting part 16 swings around the second shaft part 48, the support frame 60 of the second chemical agent-jetting part 17 also swings around the second shaft part 48 integrally with the support frame 60 of the first chemical agent-jetting part 16. This makes such a configuration that the nozzle part 62's positions around the vertical axial center in both the first and second chemical agent-jetting parts 16 and 17 can be integrally adjusted.

In the right and left direction, the second chemical agent-jetting part 17 is provided in a state of protruding more outward than the first chemical agent-jetting part 16, as shown in Fig. 4. With this, the nozzle part 62 of the second chemical agent-jetting part 17 is placed more outward in the right and left direction than the nozzle part 62 of the first chemical agent-jetting part 16.

Regarding the direction of jetting out the chemical agent by the nozzle part 62; as shown by the black-painted arrows in Figs. 3 and 9, the first chemical agent-jetting part 16 and the second chemical agent-jetting part 17 are both so configured as to jet out the chemical agent from the inner side to the outer side in the right and left direction. In contrast, in the vertical direction, the nozzle part 62 of the first chemical agent-jetting part 16 is so configured as to jet out the chemical agent from the lower side to the upper side, and the nozzle part 62 of the second chemical agent-jetting part 17 is so configured as to jet out the chemical agent from the upper side to the lower side. In the front and back direction as well, there is a difference between the first chemical agent-jetting part 16 differs from the second chemical agent-jetting part 17; as shown by the black-painted arrow on the left side of Fig. 4, the nozzle part 62 of the first chemical agent-jetting part 16 is so configured as to jet out the chemical agent from the rear side to the front side diagonally forward, while the nozzle part 62 of the second chemical agent-jetting part 17 is so configured as to jet out the chemical agent right sideways.

The nozzle part 62 of the first chemical agent-jetting part 16 is so configured that, in the vertical direction, the direction of jetting out the chemical agent by the nozzle part 62 can be horizontal, and the chemical agent jetting direction can be freely adjusted between the right and left direction and the direction from the lower side toward the upper side. The nozzle part 62 of second chemical agent-jetting part 17 as well is so configured that, in the vertical direction, the chemical agent jetting direction can be horizontal, and the chemical agent jetting direction can be freely adjusted between the right and left direction and the direction from the upper side toward the lower side.

The number of installed nozzle parts 62 can be four or more or six or more and is changeable as needed. The installation height of the nozzle part 62 also changeable as needed, and the interval between adjacent nozzle parts 62 in the vertical direction is not limited to a constant distance, and can also be different.

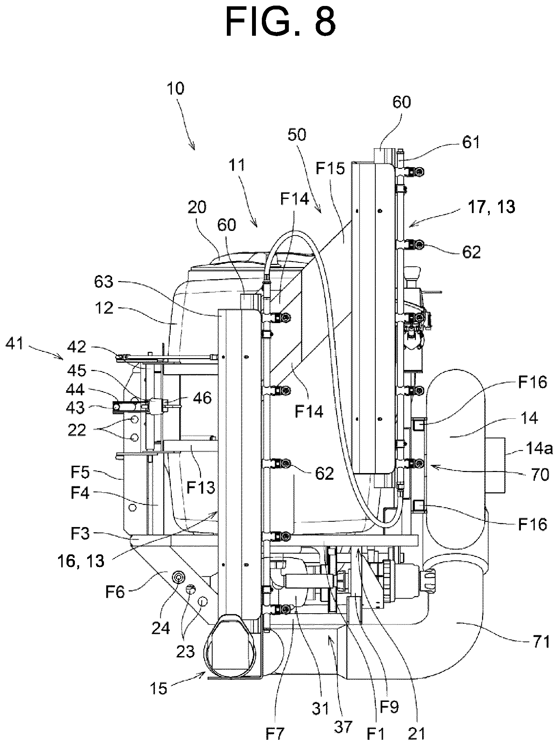

The second chemical agent-jetting part 17 is so configured as to freely move in the vertical direction relative to the first chemical agent-jetting part 16, that is to a work position, as shown in Fig. 6, where most of it is placed above the first chemical agent-jetting part 16, and to a storage position, as shown in Fig. 8, where most of it overlaps the first chemical agent-jetting part 16. In the second chemical agent-jetting part 17, as shown in Fig. 7, the support frame 60 is connected to the rear end parts of the upper and lower 14th frames F14, but the position of connecting the support frame 60 and the 14th frames F14 is movable in the vertical direction. The support frame 60 has a vertically extending groove part 64, and the rear end part of the 14th frame F14 is connected via a slide moving member 65 in a manner to freely slide in the vertical direction relative to the vertically extending groove part 64. The support frame 60 of the second chemical agent-jetting part 17 has a lower end part that is provided with a grip part 66. For example, the worker or the like gripping the grip part 66 and moving the second chemical agent-jetting part 17 in the vertical direction can change the position of the second chemical agent-jetting part 17 between the work position and the storage position.

The second chemical agent-jetting part 17 is so configured as to be freely positioned in the vertical direction between the work position shown in Fig. 6 and the storage position shown in Fig. 8. Incidentally, the position of the second chemical agent-jetting part 17 can be adjusted as described above by, for example, the worker or the like gripping the grip part 66 and sliding the second chemical agent-jetting part 17 in the vertical direction. This allows the vertical position of the second chemical agent-jetting part 17 to be adjusted upward when the height of the crop is high, and the vertical position of the second chemical agent-jetting part 17 to be adjusted downward when the height of the crop is low. Thus, the position of the second chemical agent-jetting part 17 in the vertical direction can be adjusted according to the height of the crop, allowing for flexible operation to crops of various heights.

### (Fan)

The fan 14 is placed on the rear side of the chemical agent tank 12, in line with the chemical agent tank 12 in the front and back direction, as shown in Figs. 3 to 6. The fan 14 is placed at the rearmost part on the rear side of the chemical agent-jetting part 13 and air-jetting part 15. The fan 14 is placed in the vertical direction, overlapping the chemical agent tank 12. The fan support frame 70, which supports the fan 14, is placed on the rear side of the chemical agent tank 12, as shown in Figs. 3 and 6. The fan support frame 70 is provided with upper and lower 16th frames F16, which are spaced apart vertically and extend in the right and left direction, and the fan 14 is fixedly supported to a connecting body to connect the upper and lower 16th frames F16.

The fan 14, as shown in Figs. 4, 6, and 11, includes a sirocco fan with a suction part 14a facing rearward, for example. A first duct 71 is connected to a discharge part of the fan 14, as shown in Figs. 3 and 6. The first duct 71 is L-shaped in side view, extending from the discharge part of the fan 14 to below the pump 31 and the pump support frame 37 in the vertical direction, being bent on the rear side of the chemical agent tank 12 in the front and back direction, and extending from the rear side of the chemical agent tank 12 to the lower side of the pump 31 and pump support frame 37. The first duct 71, at a front end part thereof, is branched into both sides in the right and left direction, and each of the right and left branched parts is connected to one of the right and left air-jetting parts 15 via the second duct 72.

In this way, the duct structure that supplies the blower air from the fan 14 to each of the right and left pairs of air-jetting parts 15 has the first duct 71 and the second duct 72. From the fan 14 placed in the center part in the right and left direction, the duct structure having the first duct 71 and the second duct 72 supplies the blower air to the air-jetting parts 15 placed at both end parts in the right and left direction. With this, the duct structure having the first duct 71 and the second duct 72 is, as shown in Fig. 3, is symmetrical with respect to a center line C in the right and left direction.

### (Air-Jetting Part)

As shown in Figs. 2 and 3, the air-jetting parts 15 are placed on both sides in the right and left direction, and receive the supply of blower air via the first duct 71 and second duct 72 from the fan 14. The air-jetting part 15 is connected to the lower end part of the support frame 60 of the first chemical agent-jetting part 16 via a bracket or the like. The air-jetting part 15 is placed below the first chemical agent-jetting part 16 in the vertical direction, and is placed in a state of protruding more outward than the first chemical agent-jetting part 16 and the second chemical agent-jetting part 17 in the right and left direction. Thus, the air-jetting part 15 is placed lower than the nozzle part 62 installed at the lowest part in the first chemical agent-jetting part 16, and lower than the lower end part of the first chemical agent-jetting part 16.

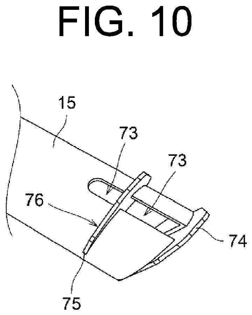

As shown in Figs. 9 and 10, the air-jetting part 15 is formed in the shape of a pipe having a hollow inner space, and an upper opening part 73 opening to the upper side is provided at the upper site of the air-jetting part 15. The upper opening part 73 is provided in a continuous state from the outer end part of the air-jetting part 15 to the inner side in the right and left direction, and is so configured as to freely jet out the blower air from the fan 14 (freely pass).

For jetting out the blower air from the lower side toward the upper side through the upper opening part 73, the air-jetting part 15 is provided with a first guide body 74 and a second guide body 75, as shown in Figs. 9 and 10. The first guide body 74 is formed in the shape of a plate, and is provided in a state of closing the outer end part of the air-jetting part 15 in the right and left direction. The first guide body 74 is provided in an outwardly sloping posture that is placed more upward on more outer side in the right and left direction, and protrudes more upward than the air-jetting part 15. The second guide body 75 is mounted to a groove-shaped mounting portion 76 formed at the middle part of the upper opening part 73, and is formed in the shape of a plate that divides the upper opening part 73 into two opening parts. Like the first guide body 74, the second guide body 75 is also provided in an outwardly sloping posture that is placed more upward on more outer side in the right and left direction, and protrudes more upward than the air-jetting part 15. The air-jetting part 15 is guided by the guiding action of the first guide body 74 and the second guide body 75; thereby, as shown by the white arrows in Fig. 3 and Fig. 9, from each of the two opening parts in the upper opening part 73, the air-jetting part 15 jets out the bower air from the lower side to the upper side and diagonally upward on the outer side in the right and left directions.

### (Power Transmission Part)

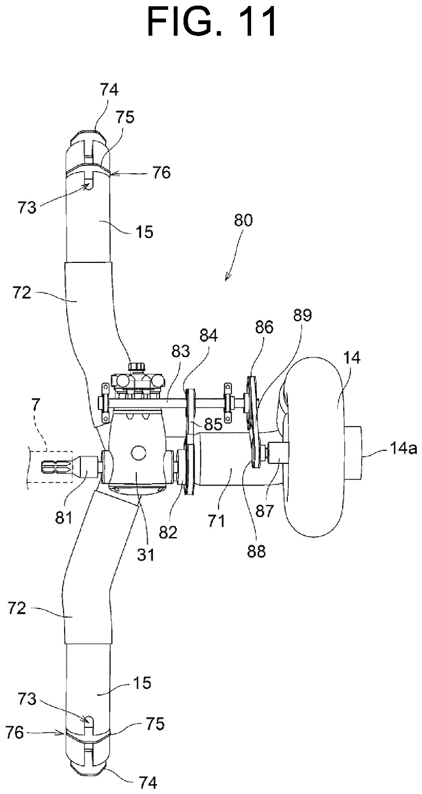

As shown in Fig. 11, there is provided a power transmission part 80 that transmits the power from the tractor 1 to the pump 31 in the chemical agent supply part 30 and to the fan 14, thereby to freely move the pump 31 and the fan 14. The power transmission part 80 has a power transmission shaft 81 extending in the front and back direction, and connecting the power transmission shaft 81 to a PTO shaft 7 of the tractor 1 transmits the power from the tractor 1 to the chemical agent-spraying device 10 via the power transmission shaft 81.

The power transmission shaft 81 is placed in a state of passing through the pump 31 in the front and back direction, as shown in Fig. 11, and is provided as a drive shaft for the pump 31. The power transmission part 80 operates the pump 31 by the rotational drive force of the power transmission shaft 81, thereby to supply, to the chemical agent-jetting part 13, the chemical agent in the chemical agent tank 12, thus jetting out the chemical agent by the chemical agent-jetting part 13.

The power transmission part 80 includes, on the rear side of the pump 31 in the power transmission shaft 81, a first pulley 82 is rotatable integrally with the power transmission shaft 81, on the right side of the pump 31 in the right and left direction, a counter shaft 83 that, in a state of being parallel to the power transmission shaft 81, extends in the front and back direction, and at the middle part of the counter shaft 83, a second pulley 84 that is rotatable integrally with the counter shaft 83. The power transmission part 80 is provided with a first timing belt 85 that is passed over the first pulley 82 of the power transmission shaft 81 and the second pulley 84 of the counter shaft 83, thereby making it possible to freely transmit the rotational drive force of the power transmission shaft 81 to the counter shaft 83.

At the rear end part of the counter shaft 83, the power transmission part 80 includes a third pulley 86 that is rotatable integrally with the counter shaft 83, and a fourth pulley 88 that is rotatable integrally with a fan drive shaft 87 of the fan 14. The power transmission part 80 is provided with a second timing belt 89 that is passed over the third pulley 86 of the counter shaft 83 and the fourth pulley 88 of the fan drive shaft 87, thereby making it possible to freely transmit the rotational drive force of the counter shaft 83 to the fan drive shaft 87.

In this way, the power transmission part 80 not only causes the power transmission shaft 81 to transmit the power from the PTO shaft 7 of the tractor 1 thereby to freely operate the pump 31, but also causes the counter shaft 83 to transmit part of the power, which is for operating the pump 31, and takes out the part of the power, and causes the fan drive shaft 87 to transmit the taken-out power, thereby to freely operate the fan 14.

### (Chemical Agent-Jetting by Chemical Agent-Jetting Part, and Air-Jetting by Air-Jetting Part)

As shown in Fig. 3, the chemical agent-jetting part 13 and the air-jetting part 15 are placed on both sides in the right and left direction, jetting out the chemical agent and the blower air from the inside to the outside in the right and left direction.

Therefore, a work vehicle such as the tractor 1 is caused to travel between crops planted at an interval in the right and left direction, and the chemical agent-spraying device 10 can jet out the chemical agent and the blower air to the crops present on both sides of the tractor 1 in the right and left direction.

As shown in Fig. 4, in the chemical agent-jetting part 13, the first chemical agent-jetting part 16 is placed at a position that corresponds to the middle part of the chemical agent tank 12, the second chemical agent-jetting part 17 is placed at a position that corresponds to the rear end part of the chemical agent tank 12, and the first chemical agent-jetting part 16 is placed on the front side of the second chemical agent-jetting part 17. In the vertical direction, as shown in Fig. 6, the first chemical agent-jetting part 16 is placed at a position that corresponds to the lateral side part of the chemical agent tank 12, the second chemical agent-jetting part 17 is placed in a state of protruding above the chemical agent tank 12, and the second chemical agent-jetting part 17 is placed on the upper side of the first chemical agent-jetting part 16.

The nozzle part 62 of the first chemical agent-jetting part 16 and the nozzle part 62 of the second chemical agent-jetting part 17, as shown by the black-painted arrows in Figs. 3 and Fig. 9, in the right and left direction, each jet out the chemical agent from the inside to the outside in the right and left direction; in the vertical direction, the nozzle part 62 of the first chemical agent-jetting part 16 jets out the chemical agent from the lower side to the upper side while the nozzle part 62 of the second chemical agent-jetting part 17 jets out the chemical agent from the upper side to the lower side. In the front and back direction, as shown by the black-painted arrow on the left side of Fig. 4, the nozzle part 62 of the first chemical agent-jetting part 16 jets out the chemical agent from the rear side to the front side diagonally forward; meanwhile, the nozzle part 62 of the second chemical agent-jetting part 17 jets out the chemical agent right sideways.

As shown in Figs. 3 and 9, the air-jetting part 15, in a state of being placed on the lower side of the first chemical agent-jetting part 16, jets out the blower air from the lower side to the upper side, as shown by the white arrows in Fig. 3 and Fig. 9. The air-jetting part 15, as shown in Fig. 4, is placed more on the front side than the first chemical agent-jetting part 16, and jets out the blower air right sideways in the front and back direction.

As shown in Fig. 9, the chemical agent-spraying device 10, by the first chemical agent-jetting part 16 and the air-jetting part 15, adheres the chemical agent to a reverse surface A2 side of a crop leaf A, and, by the second chemical agent-jetting part 17, adheres the chemical agent to an obverse surface A1 side of the crop leaf A.

The air-jetting part 15 jets out the blower air from the lower side to the upper side diagonally upward, thus making it possible to lift the crop leaf A by the blower air thereby to turn over the crop leaf A. Being provided, in the right and left direction, in a state of protruding outside the first chemical agent-jetting part 16, the air-jetting part 15 can enter the lower side of the crop leaf A and can properly turn over the crop leaf A by the blower air from the lower side to the upper side diagonally upward. The first chemical agent-jetting part 16, since also jetting out the chemical agent from the lower side toward the upper side diagonally upward, can jet out the chemical agent to the reverse surface A2 side of the crop leaf A that is turned over by the blower air. Thus, the first chemical agent-jetting part 16, as a chemical agent-jetting target range for jetting out the chemical agent, targets the crops present within the air jetting range where the air-jetting part 15 jets out the air. Therefore, the jetting of the blower air by the air-jetting part 15 and the jetting of the chemical agent by the first chemical agent-jetting part 16 can efficiently adhere the chemical agent onto the reverse surface A2 side of the crop leaf A.

In the front and back direction, as shown in Fig. 4, the air-jetting part 15 is placed more on the front side than the first chemical agent-jetting part 16, so that the air-jetting part 15 is placed more on the front side than the nozzle part 62 of the first chemical agent-jetting part 16. The air-jetting part 15 jets out the air right sideways in the front and back direction, and the blower air turns over the crop leaf A. Then, the nozzle part 62 of the first chemical agent-jetting part 16 jets out the chemical agent from the rear side to the front side diagonally forward, as shown by the black-painted arrow on the left side in Fig. 4. This allows the nozzle part 62 of the first chemical agent-jetting part 16 to properly adhere the chemical agent onto the crop leaf A that is present within the air jetting range where the air is jetted out by the air-jetting part 15 and that is turned over.

The second chemical agent-jetting part 17 jets out the chemical agent from the upper side to the diagonally lower side, so the chemical agent can be efficiently adhered to the obverse surface A1 side of the crop leaf A facing upward. In the front and back direction, the air-jetting part 15 and the second chemical agent-jetting part 17 are placed in a manner to be placed at an interval of a predetermined distance K, as shown in Fig. 4. Therefore, the second chemical agent-jetting part 17, without being affected by the blower air from the air-jetting part 15, can properly jet out the chemical agent to the inherent jetting point (e.g., the obverse surface side of the crop leaf A), etc. The predetermined distance K can be set in advance, for example, by conducting an experiment to determine the extent to which the blower air from the air-jetting part 15 affects the jetting of the chemical agent.

### (Operation of Chemical Agent-Spraying Device)

The following describes an operation of the chemical agent-spraying device 10.

Although not shown, there is provided a control part that controls an operation of the chemical agent-spraying device 10 according to an operation by a human-operated operation part provided in the tractor 1 or the like. The control part controls operating states of the pump 31, distribution part 32, fan 14, and the like, thereby to control the operation of the chemical agent-spraying device 10.

For example, as the operation parts, there are provided a right operation part for jetting out the chemical agent from the chemical agent-jetting part 13 placed on the right side with respect to the forward direction of the tractor 1, and a left operation part for jetting out the chemical agent from the chemical agent-jetting part 13 placed on the left side with respect to the forward direction of the tractor 1.

When the right operation part is turned ON or OFF, and when the left operation part is turned ON or OFF, the same operation is performed; therefore, the following is a description of the case where the right operation part is turned ON or OFF.

When the right operation part is turned on, the control part controls the operation states of the pump 31, the distribution part 32, the fan 14, etc., thereby to cause the blower air jetting by the right air-jetting part 15 and the chemical agent jetting by the right first chemical agent-jetting part 16 to jet out the chemical agent onto the reverse surface side of the crop leaf A, and cause the chemical agent jetting by the second chemical agent-jetting part 17 to jet out the chemical agent onto the obverse surface side of the crop leaf A. In contrast, when the right operation part is turned OFF, the control part controls the operating state of the distribution part 32, etc. thereby to stop the chemical agent jetting by the right first chemical agent-jetting part 16 and the second chemical agent-jetting part 17.

### (Experimental Result)

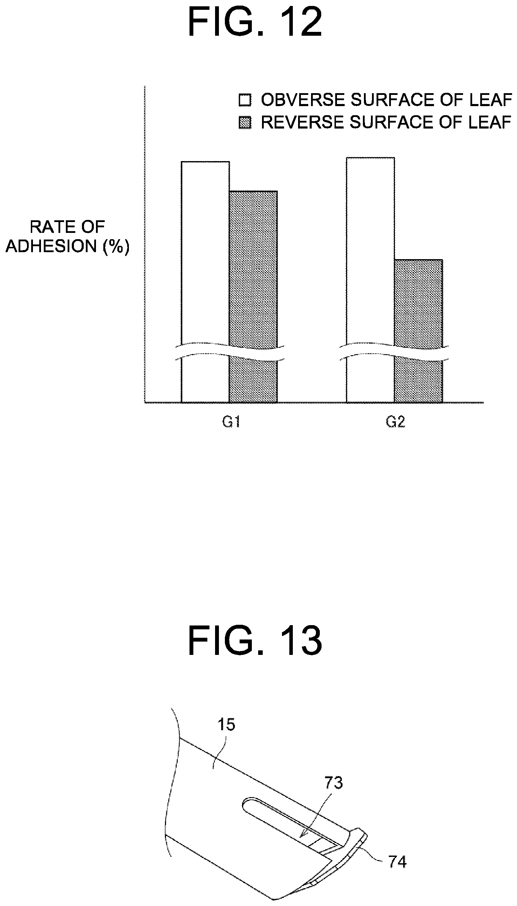

An experiment has been conducted so as to see how much chemical agent adhered to the obverse surface side and reverse surface side of the crop leaf by the chemical agent spraying by the chemical agent-spraying device 10 of the present embodiment. In this experiment, the adhesion rate of the chemical agent is determined for the obverse and reverse of the leaf, as shown in Fig. 12. In Fig. 12, G1 on the left shows the case where both operations, including the blower air jetting by the air-jetting part 15 and the chemical agent jetting by the chemical agent-jetting part 13, have been performed. G2 on the right, for comparison with G1, shows the case where the blower air jetting by the air-jetting part 15 was not performed and only the chemical agent jetting by the chemical agent-jetting part 13 was performed.

For the reverse surface side of the leaf, the G1 has a greater rate of adhesion than the G2. With this, it can be confirmed that the blower air jetting by the air-jetting part 15 lifts and turns over the crop leaf, and the chemical agent jetting by the first chemical agent-jetting part 16 can properly adhere the chemical agent onto the reverse surface side of the turned over leaf.

### [Other Embodiments]

Other embodiments of the present invention will be described. Note that a configuration of each of the embodiments described below is not limited to being adopted independently, but can be adopted in combination with a configuration of another embodiment.
(1) In the above embodiment, as the relation of placing, in the front and back direction, the first chemical agent-jetting part 16 and the second chemical agent-jetting part 17, the first chemical agent-jetting part 16 is placed on the front side and the second chemical agent-jetting part 17 is placed on the rear side; however, conversely, the first chemical agent-jetting part 16 can be placed on the rear side and the second chemical agent-jetting part 17 can be placed on the front side. For example, the second chemical agent-jetting part 17 can be placed on the front side by a predetermined distance from the first chemical agent-jetting part 16, and the air-jetting part 15 can be placed in a position to overlap the first chemical agent-jetting part 16 in the front and back direction.
(2) In the above embodiment, in the front and back direction, the first chemical agent-jetting part 16 and the air-jetting part 15 are placed in a manner to overlap; however, for example, the air-jetting part 15 can be placed on the front side by a predetermined distance from the first chemical agent-jetting part 16, and the first chemical agent-jetting part 16 and the air-jetting part 15 can be placed at different positions in the front and back direction.
(3) In the above embodiment, the air-jetting part 15 is provided with the second guide body 75 in addition to the first guide body 74 thereby to divide the upper opening part 73 into two openings; however, as shown in Fig. 13, for example, the above embodiment can be implemented without the second guide body 75, but with only the first guide body 74.
(4) Although being provided with the fan 14 and the air-jetting part 15, the above embodiment can be implemented without the fan 14 and the air-jetting part 15. In this case, the first chemical agent-jetting part 16 jets out the chemical agent from the lower side toward the upper side, so that the chemical agent-jetting target range is the reverse surface side of the crop leaf. The second chemical agent-jetting part 17 jets out the chemical agent from the upper side to the lower side, so that the chemical agent-jetting target range is the obverse surface side of the crop leaf. In this case, for example, adjusting the pressure of jetting out the chemical agent can work to cause the chemical agent jetting by the first chemical agent-jetting part 16 to properly adhere the chemical agent onto the reverse surface side of the crop leaf, and to cause the chemical agent jetting by the second chemical agent-jetting part 17 to properly adhere the chemical agent onto the obverse surface side of the crop leaf.
(5) The above embodiment is so configured that providing the positioning mechanism 41 allows the human operation by the worker or the like to freely adjust the position of the chemical agent-jetting part 13 in the right and left direction. Alternatively, for example, as in the positioning mechanism 41, the 13th frame F13 can be freely supported in a manner to freely swing around the first shaft part 42 relative to the 12th frame F 12, and an actuator (corresponding to a position adjustment part) such as a motorized air cylinder can be provided across the 13th frame F13 and the 12th frame F12. In this case, by extending and retracting the motorized air cylinder, the 13th frame F 13 is driven to swing around the first shaft part 42 relative to the 12th frame F12, making it possible to automatically adjust the position of the chemical agent-jetting part 13 in the right and left direction.

Thus, when the actuator is provided, the position of the chemical agent-jetting part 13 can be automatically adjusted in the right and left direction, so that, for example, when the tractor 1 is caused to travel between crops spaced apart in the right and left direction thereby to jet out the chemical agent, the chemical agent-jetting part 13 can be adjusted to the outer work position closer to the crop in the right and left direction. Then, when the tractor 1 is turned to travel to the next crop, the chemical agent-jetting part 13 can be adjusted to the inner storage position away from the crop in the right and left direction. Therefore, when the tractor 1 is turned to travel, the chemical agent-jetting part 13 can be placed in the storage position closer to the tractor 1 in the right and left direction thereby to reduce the amount of protrusion in the right and left direction, making it possible to prevent the chemical agent-jetting part 13 from coming into contact with an obstacle and the like.

### (Supplementary Note of Invention)

A second characteristic configuration of the present invention is that the first chemical agent-jetting part jets out the chemical agent from the lower side toward the upper side, and the second chemical agent-jetting part jets out the chemical agent from the upper side to the lower side, and the first chemical agent-jetting part and the second chemical agent-jetting part are placed at an interval of a predetermined distance.

According to the present configuration, the first chemical agent-jetting part can efficiently jet out the chemical agent onto the reverse surface side of the leaf simply by adopting a simple configuration in which the chemical agent-jetting direction is directed from the lower side toward the upper side. The second chemical agent-jetting part can also efficiently jet out the chemical agent onto the obverse surface side of the leaf simply by adopting a simple configuration in which the chemical agent-jetting direction is directed from the upper side to the lower side.

For example, it is probable that when the first and second chemical agent-jetting parts are placed close to each other, the chemical agent jetted out from the first chemical agent-jetting part is affected by the chemical agent jetted out from the second chemical agent-jetting part and reaches a point outside the inherent chemical agent-jetting range, or conversely, the chemical agent jetted out from the second chemical agent-jetting part is affected by the chemical agent jetted out from the first chemical agent-jetting part and reaches a point outside the inherent chemical agent-jetting range. When being placed close to each other, the first and second chemical agent-jetting parts may interfere with each other and may not be able to properly jet out the chemical agent in the inherent chemical agent-jetting range. Therefore, according to the present configuration, the first and second chemical agent-jetting parts are placed at an interval of a predetermined distance. This allows the first and second chemical agent-jetting parts to suppress interference with each other and properly jet out the chemical agent in the inherent chemical agent-jetting range, making it possible to properly adhere the chemical agent to both the obverse surface side and reverse surface side of the crop leaf.

A fourth characteristic configuration of the present invention is that the first chemical agent-jetting part jets out the chemical agent from the lower side toward the upper side, the second chemical agent-jetting part jets out the chemical agent from the upper side toward the lower side, and the air-jetting part and the second chemical agent-jetting part are placed at an interval of a predetermined distance in the front and back direction of the work vehicle.

According to the present configuration, the first chemical agent-jetting part can efficiently jet out the chemical agent onto the reverse surface side of the turned leaf simply by adopting a simple configuration in which t the chemical agent-jetting direction is directed from the lower side toward the upper side. The second chemical agent-jetting part can also efficiently jet out the chemical agent onto the obverse surface side of the leaf simply by adopting a simple configuration in which the chemical agent-jetting direction is directed from the upper side to the lower side.

The blower air is jetted out from the air-jetting part; therefore, when the air-jetting part and the second chemical agent-jetting part are installed close to each other in the front-rear direction of the work vehicle, the chemical agent from the second chemical agent-jetting part may be affected by the blower air from the air-jetting part and diffused, or may reach a point outside the inherent jetting point (e.g., the obverse surface side of the crop leaf). Then, according to the present configuration, the air-jetting part and the second chemical agent-jetting part are placed at an interval of a predetermined distance in the front and back direction of the work vehicle. This allows the second chemical agent-jetting part to properly jet out the chemical agent to the inherent jetting point (e.g., on the obverse surface side of the crop leaf) without being affected by the blower air from the air-jetting part, so that the chemical agent can efficiently adhere to the obverse surface side of the crop leaf.

A fifth characteristic configuration of the present invention is that the device main body including the chemical agent tank, the chemical agent-jetting part, the fan, and the air-jetting part can be freely connected to the rear side of the work vehicle, and the first chemical agent-jetting part, in the front and back direction of the work vehicle, is placed more on the front side than the second chemical agent-jetting part at an interval of a predetermined distance.

When the work vehicle is driven to perform the work; depending on the conditions of the work site, the work vehicle may be in the forward inclined posture with the front side placed on the upper side and the rear side placed on the lower side. Therefore, for connecting the device main body to the rear side of the work vehicle, it is necessary to prevent the device main body of the chemical agent-spraying device from coming into contact with the ground or the like on the work site even when the work vehicle is in the forward inclined posture. For this reason, the chemical agent-spraying device's rear end site in the device main body needs to be placed higher up.

In the device main body of the chemical agent-spraying device, the first chemical agent-jetting part jets out the chemical agent from the lower side toward the upper side, while the second chemical agent-jetting part jets out the chemical agent from the upper side to the lower side; therefore, in the vertical direction, the second chemical agent-jetting part is placed more on the upper side than the first chemical agent-jetting part. Therefore, according to the present configuration, in the front and back direction of the work vehicle, the first chemical agent-jetting part is placed more on the front side than the second chemical agent-jetting part at an interval of a predetermined distance. This allows the first chemical agent-jetting part, which is placed lower than the second chemical agent-jetting part, to be placed more forward than the second chemical agent-jetting part, so that the chemical agent-spraying device's rear site in the device main body can be placed higher up. Therefore, when the work vehicle is in the forward inclined posture, the angle between the work vehicle and the ground, that is, a separation angle, can be large, making it possible to properly prevent the device main body of the chemical agent-spraying device from coming into contact with the ground or the like at the work site.

A sixth characteristic configuration of the present invention is that the chemical agent tank is placed between the first and second chemical agent-jetting parts in the front and back direction of the work vehicle.

According to the present configuration, the chemical agent tank is placed between the first and second chemical agent-jetting parts in the front and back direction of the work vehicle, so a heavy chemical agent tank can be placed in the center part of the chemical agent-spraying device in the front and back direction of the work vehicle. With this, the center of gravity of the chemical agent-spraying device is placed in a stable position, so that the chemical agent-spraying device can be maintained in a stable posture even when the work vehicle is driven, and the chemical agent-spraying work to spray the chemical agent can be properly performed.

A seventh characteristic configuration of the present invention is that the air-jetting part is placed lower than the lower end part of the first chemical agent-jetting part.

According to the present configuration, the air-jetting part, since being placed lower than the lower end part of the first chemical agent-jetting part, can be placed further lower. This allows the blower air jetted out from the air-jetting part to be jetted out from a further lower side onto the crop leaf, thereby ensuring that the crop leaf is lifted and the leaf is properly turned over. The crop leaf present on the lower side can also be properly turned over.

An eighth characteristic configuration of the present invention is that the chemical agent supply part is provided to supply the chemical agent from the chemical agent tank to the chemical agent-jetting part and to perform the chemical agent jetting by the chemical agent-jetting part, the chemical agent tank and the chemical agent supply part are placed in a manner to overlap in the vertical direction, and the power transmission part is provided that transmits, to the fan, part of the power, which operates the chemical agent supply part, as the power to operate the fan.

According to the present configuration, the center of gravity of the chemical agent-spraying device can be properly placed in a stable position such as the center part in the front and back direction of the work vehicle, because the heavy chemical agent tank and the chemical agent supply part are placed in a manner to overlap in the vertical direction. Thus, even when the work vehicle is driven, the chemical agent-spraying device can be maintained in a stable posture, and the chemical agent-spraying work to spray the chemical agent can be properly performed.

Moreover, since the power transmission part transmits, to the fan, part of the power, which operates the chemical agent supply part, as the power to operate the fan, making it possible to extract and transmit part of the power, which operates the chemical agent supply part, as the power to operate the fan, without a power source to operate the fan or a configuration to transmit the power from the power source to the fan. Thus, not only the chemical agent supply part but also the fan can be operated while simplifying the configuration and improving the efficiency of power transmission.

A ninth characteristic configuration of the present invention is that the chemical agent-jetting part and the air-jetting part are provided in pairs on the right and left sides of the work vehicle, the duct structure is provided to supply the blower air from the fan to each of the right and left pairs of air-jetting parts, and the duct structure is symmetrical on right and left.

According to the present configuration, the duct has the symmetrical structure on right and left, so the pressure loss from the fan to the air-jetting part can be the same or substantially the same in the right and left air-jetting parts. Thus, the amount of blower air from the right and left air-jetting parts can be the same or substantially the same; therefore, on the right and left sides, there is no bias on crops that exist on the right and left sides of the work vehicle, making it possible to jet out the blower air in a balanced manner.

A tenth characteristic configuration of the present invention is that the fan is placed at the rearmost part on the rear side of the chemical agent-jetting part and the air-jetting part.

According to the present configuration, the fan is placed at the rearmost part on the rear side of the chemical agent-jetting part and the air-jetting part, so the rear side of the fan is opened. Therefore, the fan, for example, a sirocco fan provided with the suction part on the rear side, can be adopted thereby to suck enough air while simplifying the configuration and preventing interference with any other member.

An eleventh characteristic configuration of the present invention is that the chemical agent-jetting parts are provided in pairs on the right and left sides of the work vehicle, and the right and left chemical agent-jetting parts are configured to be position-adjustable in the right and left direction.

According to the present configuration, a pair of chemical agent-jetting parts are provided on the right and left sides of the work vehicle, so the work vehicle can be driven between the crops present at an interval in the right and left direction, and the right and left chemical agent-jetting parts can jet out the chemical agent onto the crops present on both sides of the work vehicle in the right and left direction.

In this case, the interval between the work vehicle and the crop in the right and left direction may not be constant depending on the conditions of the work site, etc.; for example, the position of the chemical agent-jetting part may be too far or too close relative to the crop. Then, according to the present configuration, the right and left chemical agent-jetting parts are configured to be position-adjustable in the right and left direction. This allows the position of the chemical agent-jetting part to be adjusted in the right and left direction so that the chemical agent-jetting part is placed at a proper position relative to the crop according to the interval between the work vehicle and the crop, so that the chemical agent can be jetted onto the crop from a proper position.

A twelfth characteristic configuration of the present invention is that the position adjustment part is provided to adjust the position of the right and left chemical agent-jetting parts in the right and left direction when the work vehicle is traveling in a turn.

According to the present configuration, the position adjustment part can automatically adjust the positions of the right and left chemical agent-jetting parts in the right and left direction as far inward as possible when the work vehicle is traveling in a turn, thus making it possible to prevent the chemical agent-jetting part from coming into contact with the obstacle or the like at the time of the traveling in a turn.

A thirteenth characteristic configuration of the present invention is that the second chemical agent-jetting part is so configured as to be position-adjustable in the vertical direction.

According to the present configuration, for example, adjusting the position of the second chemical agent-jetting part in the vertical direction to a further lower side can reduce as much as possible the size of the chemical agent-spraying device in the vertical direction. Thus, for storing the chemical agent-spraying device in a barn, etc., the storage space can be made smaller, making it possible to accomplish an efficient storing.

When the height of the crop is high, the vertical position of the second chemical agent-jetting part can be adjusted upward, and when the height of the crop is low, the vertical position of the second chemical agent-jetting part can be adjusted downward. In this way, the position of the second chemical agent-jetting part can be adjusted in the vertical direction according to the height of the crop, making it possible to flexibly cope with crops of various heights.

## Claims

1. A chemical agent-spraying device mountable on a work vehicle, comprising:
a chemical agent tank; and
a chemical agent-jetting part that jets out a chemical agent supplied from the chemical agent tank,
wherein
the chemical agent-jetting part includes
a first chemical agent-jetting part that jets out the chemical agent onto a reverse surface of a crop leaf as an area to which the chemical agent is to be jetted, and
a second chemical agent-jetting part that jets out the chemical agent onto an obverse surface of a crop leaf as an area to which the chemical agent is to be jetted.

2. The chemical agent-spraying device as claimed in claim 1, wherein the first chemical agent-jetting part jets out the chemical agent from a lower side toward an upper side, the second chemical agent-jetting part jets out the chemical agent from the upper side toward the lower side, and the first chemical agent-jetting part and the second chemical agent-jetting part are placed at an interval of a predetermined distance.

3. A chemical agent-spraying device mountable on a work vehicle, comprising:
a chemical agent tank;
a chemical agent-jetting part that jets out a chemical agent supplied from the chemical agent tank;
a fan; and
an air-jetting part that, from a lower side to an upper side, jets out blower air from the fan,
wherein
the chemical agent-jetting part includes
a first chemical agent-jetting part that, as a chemical agent-jetting target range for jetting out the chemical agent, targets a crop present within an air jetting range where the air-jetting part jets out air, and
a second chemical agent-jetting part that, as a chemical agent-jetting target range for jetting out the chemical agent, targets a crop present outside the air jetting range where the air-jetting part jets out the air.

4. The chemical agent-spraying device as claimed in claim 3, wherein
the first chemical agent-jetting part jets out the chemical agent from a lower side toward an upper side,
the second chemical agent-jetting part jets out the chemical agent from the upper side toward the lower side, and
the air-jetting part and the second chemical agent-jetting part are placed at an interval of a predetermined distance in a front and back direction of the work vehicle.

5. The chemical agent-spraying device as claimed in claim 4, wherein
a device main body including the chemical agent tank, the chemical agent-jetting part, the fan, and the air-jetting part is freely connected to a rear side of the work vehicle, and
the first chemical agent-jetting part, in the front and back direction of the work vehicle, is placed more on a front side than the second chemical agent-jetting part at an interval of a predetermined distance.

6. The chemical agent-spraying device as claimed in any one of claims 3 to 5, wherein the chemical agent tank is placed between the first chemical agent-jetting part and the second chemical agent-jetting part in the front and back direction of the work vehicle.

7. The chemical agent-spraying device as claimed in any one of claims 3 to 6, wherein the air-jetting part is placed lower than a lower end part of the first chemical agent-jetting part.

8. The chemical agent-spraying device as claimed in any one of claims 3 to 7, wherein
a chemical agent supply part is provided to supply the chemical agent from the chemical agent tank to the chemical agent-jetting part and to perform the chemical agent jetting by the chemical agent-jetting part,
the chemical agent tank and the chemical agent supply part are placed in a manner to overlap in a vertical direction, and
a power transmission part is provided that transmits, to the fan, part of a power, which operates the chemical agent supply part, as power to operate the fan.

9. The chemical agent-spraying device as claimed in any one of claims 3 to 8, wherein
the chemical agent-jetting part and the air-jetting part are provided in pairs on right and left sides of the work vehicle,
a duct structure is provided to supply the blower air from the fan to each of the pair of the right and left air-jetting parts, and
the duct structure is symmetrical on right and left.

10. The chemical agent-spraying device as claimed in any one of claims 3 to 9, wherein the fan is placed at a rearmost part on a rear side of the chemical agent-jetting part and the air-jetting part.

11. The chemical agent-spraying device as claimed in any one of claims 1 to 10, wherein
the chemical agent-jetting part includes a pair of chemical agent-jetting parts on right and left sides of the work vehicle, and
the right and left chemical agent-jetting parts are position-adjustable in a right and left direction.

12. The chemical agent-spraying device as claimed in claim 11, wherein a position adjustment part is provided to adjust a position of the right and left chemical agent-jetting parts in the right and left direction when the work vehicle is traveling in a turn.

13. The chemical agent-spraying device as claimed in any one of claims 1 to 12, wherein the second chemical agent-jetting part is so configured as to be position-adjustable in a vertical direction.
